# EUROPEAN PATENT APPLICATION

(11) **EP 2 371 668 A1**
(43) Date of publication of application: **05.10.2011**
(21) Application number: 11159405.7
(22) Date of filing: 23.03.2011
(51) Int. Cl.: B62B 3/02, B62K 13/08, B62K 5/04, B62K 15/00, B62K 3/04, B62K 19/46

(54) **Cycles convertible into, for example, shopping trolleys, and frames therefor**

(30) Priority: 29.03.2010 GB 1005193
(71) Applicant: Bush, Edmund Helmuth, Sparsholt Winchester SO21 2NS (GB)
(72) Inventor: Bush, Edmund Helmuth, Sparsholt Winchester SO21 2NS (GB)
(74) Representative: Targett, Kenneth Stanley

(57) **Abstract**

The cycle frame can be transformed between a cycling configuration and a compacted configuration. The frame comprises: a rear frame portion (14) on which at least one rear wheel (48) can be mounted; a front frame portion (12) having a steering head (20) for a steering column (60); an arrangement (22,24,40) connecting the front and rear frame portions together for sliding movement between the cycling configuration and the compacted configuration in which the steering head is closer to the rear wheel axis than in the cycling configuration; a lower frame portion (16) having a bottom bracket shell (44) for a crankset (64), the lower frame portion (16) being pivotally connected to the rear frame portion adjacent the rear wheel axis; and a linkage (18) pivotally connected to the lower frame portion adjacent the bottom bracket and to the front frame portion, such that the linkage holds the bottom bracket at a higher position in the compacted configuration than in the cycling configuration so that fouling of the front wheel with the bottom bracket can be avoided when in the compacted configuration.

## Description

This invention relates to bicycles, tricycles and frames therefor.

A conventional cycle frame has means for mounting at least one rear wheel, a steering head for receiving a steering column and a bottom bracket shell for mounting a crankset.

Aims of the present invention, or at least of specific embodiments thereof are to enable a cycle built with such a frame to be transformed between a cycling configuration in which it can be used like a conventional cycle and a compacted configuration in which the cycle takes up less space, can still be moved around and steered and preferably is suitable for use like a shopping trolley in a supermarket or shopping precinct.

In accordance with a first aspect of the invention, there is provided a cycle frame which can be transformed between a cycling configuration and a compacted configuration, the frame comprising: a rear frame portion having means for mounting at least one rear wheel thereon for rotation about a rear wheel axis; a front frame portion having a steering head for receiving a steering column; means connecting the front and rear frame portions together for sliding movement between the cycling configuration and the compacted configuration in which the steering head is closer to the rear wheel axis than in the cycling configuration; a lower frame portion having means for mounting a crankset, the lower frame portion being pivotally connected to the rear frame portion adjacent the rear wheel axis; and a linkage pivotally connected to the lower frame portion adjacent the crankset mounting means and to the front frame portion, such that the linkage holds the crankset mounting means at a higher position in the compacted configuration than in the cycling configuration.

In accordance with a second aspect of the invention, there is provided a cycle which can be transformed between a cycling configuration and a compacted configuration, the cycle comprising: a frame according to the first aspect of the invention; at least one rear wheel mounted on the rear frame portion; a steering column mounted on the steering head; a front wheel mounted on the steering column; a crankset mounted on the crankset mounting means; means for transmitting drive from the crankset to the rear wheel, or at least one of the rear wheels; and a shopping container mounted on the rear frame portion over the axis of the rear wheel(s).

By providing the rear wheel mounting means and the steering head on different rear and front frame portions which can be slid towards and away from each other, the overall length of the frame can be changed. By providing the crankset mounting means on a further lower frame portion which is raised by the linkage when transforming from the cycling configuration to the shorter compacted configuration, fouling of the front wheel with the crankset mounting means can be avoided when in the compacted configuration. By providing a shopping container on the rear frame portion, the cycle can be used as a shopping trolley when in the compacted configuration.

The connecting means for the front and rear frame portions preferably comprises: a front spine member of the front frame portion extending rearwardly from the steering head; a pair of substantially parallel rear spine members of the rear frame portion extending forwardly to either side of the front spine member; and means releasably clamping the spine members together. When clamped, this arrangement of spine portions can provide a sufficiently rigid structure. The clamping means preferably comprises at least one clamping arrangement having: upper and lower clamp plates mounted on the front spine member and extending over and under the rear spine members; and means for moving the upper and lower clamp plates together so that the rear spine members are clamped between the upper and lower clamp plates. One of the clamping plates of the, or each, clamping arrangement is preferably rigidly fixed to the front spine member. Preferably, there is a plurality of such clamping arrangements having a common actuating mechanism to facilitate operation of the clamping arrangements.

When in the collapsed configuration, the rear spine members preferably extend forwardly beyond and to either side of the steering head (i.e. above the front wheel).

When in the compacted configuration: the crankset mounting means is preferably disposed closely adjacent the spine members; and the crankset mounting means is preferably disposed closely adjacent the steering head, for example with a spacing in each case of no more than 100 mm and preferably less.

The frame preferably further includes: a saddle post mounted on the rear frame portion and having means for mounting a saddle for movement between a position which is transversely central of the frame and a position in which the saddle is offset transversely from the centre of the frame, so that fouling of the steering column with the saddle can be avoided when in the compacted configuration.

The rear frame portion may have means for mounting two rear wheels so that the frame is a tricycle frame. All three wheels may remain on the ground when in the collapsed configuration.

Alternatively, the rear frame portion may have means for mounting a single rear wheel so that the frame is a bicycle frame. In this case, the lower frame portion preferably extends from the crankset mounting means beyond the rear wheel axis to a pair of ends to either side of the frame, with each end of the lower frame portion having means for mounting a further wheel thereon for rotation about a further wheel axis. The arrangement is preferably such that, when in the compacted configuration, the further wheels contact the ground to raise the rear wheel off the ground so as to give the bicycle, standing on its front wheel and two further wheels, stability when in the compacted configuration. Although the further wheels will be raised off the ground when in the cycling configuration due to pivoting of the bottom frame portion, linkages may be provided acting between the rear frame portion and each further wheel mounting means to alter the inclinations of the further wheel axes between the cycling configuration and the compacted inclination. The ground clearance of the further wheels when in the cycling configuration can therefore be increased.

Specific embodiments of the present invention will now be described purely by way of example with reference to the accompanying drawings in which :-
- Figure 1: is a side view of a set of frame parts of a bicycle of an embodiment of the first invention;
- Figure 2: is a plan view of the frame parts of Figure 1 (other than a frame linkage);
- Figure 3: is a side view of a bicycle constructed using the frame parts of Figures 1 and 2 when in a cycling configuration;
- Figure 4: is a side view of the bicycle of Figure 3 when in a shopping configuration;
- Figure 5: is a longitudinal-sectional view through a first clamping arrangement for the bicycle of Figures 3 and 4;
- Figure 6: is a cross-sectional view through the clamping arrangement of Figure 5;
- Figure 7: is a plan view of a second clamping arrangement;
- Figure 8: is a longitudinal-sectional view through a third clamping arrangement for the bicycle of Figures 3 and 4;
- Figure 9: is a cross-sectional view through the clamping arrangement of Figure 8;
- Figure 10: is a longitudinal-sectional view and a cross-sectional view through a fourth clamping arrangement for the bicycle of Figures 3 and 4;
- Figure 11: is a cross-sectional view through the clamping arrangement of Figure 10, taken on the section line 11-11;
- Figure 12: is a side view of a second embodiment of bicycle in its cycling configuration;
- Figure 13: is a side view of the bicycle of Figure 12 in its compacted configuration;
- Figure 14: is a scrap view in the direction of the arrow 14 in Figure 12; and
- Figure 15: is a scrap view in the direction of the arrow 15 in Figure 13.

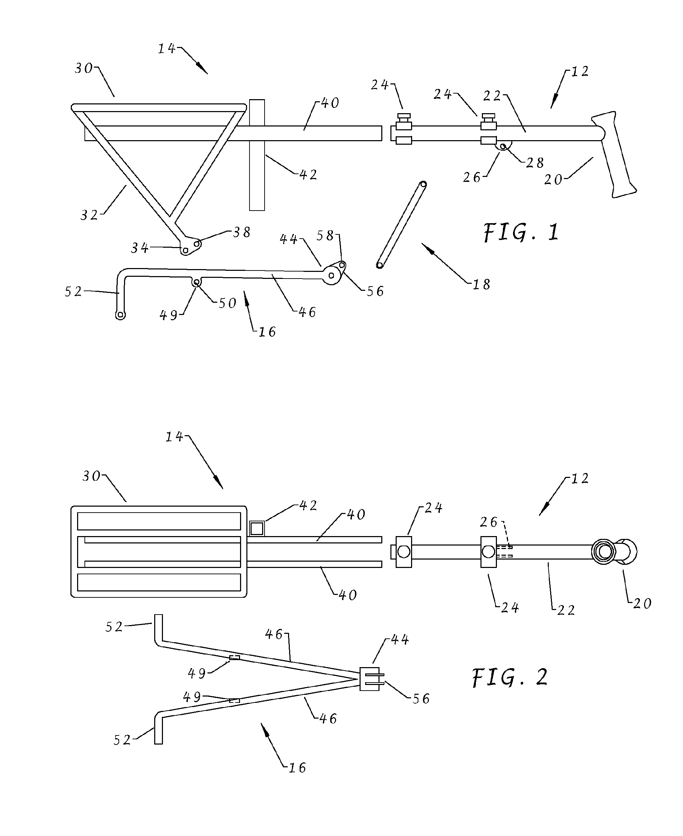

The bicycle 10 of Figures 1 to 6 has a frame formed, as particularly shown in Figures 1 and 2, by a front frame portion 12, a rear frame portion 14, a lower frame portion 16 and a linkage 18.

The front frame portion 12 has a conventional steering head 20 and a spine tube 22 which extends rearwardly generally horizontally from the steering head 20. A pair of clamping arrangements 24, to be described in more detail below, are fitted adjacent the rear end of the spine tube 22 and part-way along the spine tube 22. A pair of lugs 26 are welded part-way along and beneath the spine tube 22 and provides a pivot point 28 for an upper/front end of the linkage 18.

The rear frame portion 14 comprises a rack 30 from which a pair of triangular subframes 32 depend. Adjacent a lower apex of each subframe 32, a hole 34 is formed to receive a rear wheel spindle 36 and a pivot point 38 is provided for the lower frame portion 16. A pair of parallel spine tubes 40 are welded to the insides of the triangular subframes 32 and extend forwardly generally horizontally. The spacing between the spine tubes 40 of the rear frame portion 14 is slightly larger than the width of the spine tube 22 of the front frame portion 12. A socket 42 for a saddle post 43 is welded to the outer side of one of the spine tubes 40 in front of the rack 30.

The lower frame portion 16 comprises a bottom bracket shell 44 and a pair of arms 46 extending rearwardly therefrom and spaced apart so that the rear wheel 48 can be fitted between the arms 46. Each arm 46 has a lug 49 welded underneath it to provide a pivot point 50 to a respective pivot point 38 of the rear frame portion 14. The arms 46 extend beyond the lugs 49 and are out-turned at their ends 52 to provide mounts for a pair of trolley wheels 54. A pair of lugs 56 are welded to the bottom bracket shell 44 and provide a pivot point 58 for the lower/rear end of the linkage 18.

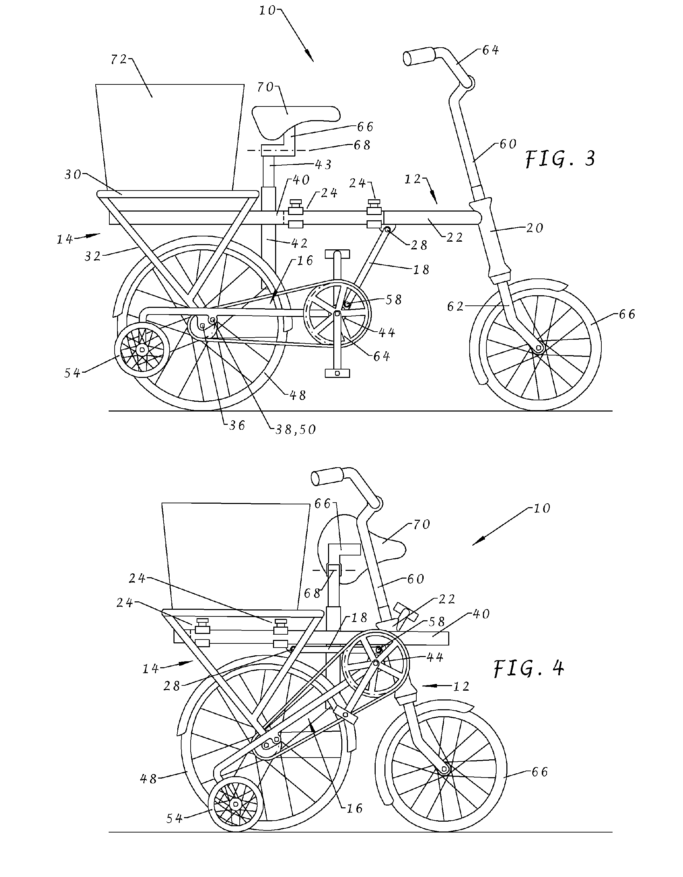

Figure 3 shows the bicycle 10 assembled and in its cycling configuration. A steering column 60 with front forks 62 and handlebars 64 is mounted in the steering head 20 of the front frame portion 12, and a front wheel 66 is mounted between the front forks 62, all in a conventional fashion. The rear wheel 48 is mounted by its spindle 36 between the triangular subframes 32 of the rear frame portion 14. The lower frame portion 16 has its lugs 49 pivoted to the rear frame portion at the pivot points 38,50. A crankset 64 is mounted on the bottom bracket shell 44 and has a chainwheel connected by a chain to a rear wheel sprocket in a conventional fashion. The linkage 18 is connected between the pivot point 28 of the front frame portion 12 and the pivot point 58 on the lower frame portion 16. A rear portion of the spine tube 22 of the front frame portion 12 is disposed between front portions of the spine tubes 40 of the rear frame portion 14, and the spine tubes 22,40 are clamped together by the clamping arrangements 24, as will be described in more detail below. The saddle post 43 is clamped in the socket 42. A saddle bracket 66 is mounted to the upper end of the saddle post 43 for pivotal movement about the axis 68 between the positions shown in Figures 3 and 4. When in the position shown in Figure 3, the saddle bracket 66 extends to the centre plane of the bicycle 10, and a saddle 70 mounted on the bracket 66 is centrally positioned. The trolley wheels 54 are mounted on the rear ends 52 of the arms 46 of the lower frame portion 16. A shopping container 72 such as a basket or box is releasably attached to the rack 30 of the rear frame portion 14 behind the saddle.

When in the cycling configuration shown in Figure 3, the trolley wheels 54 are raised a substantial distance above the ground. It will be appreciated that the bicycle 10 can therefore be ridden in a conventional fashion, and shopping articles can be carried in the basket 72.

The bicycle 10 can be transformed to a compacted configuration, as shown in Figure 4. To achieve this, the saddle 70 and its bracket 66 are pivoted about the axis 68 to the position shown in Figure 4 in which saddle 70 is disposed on its side and to the left of the left spine tube 40 of the rear frame portion 14. Then, the clamping arrangements 24 are released, as will be described in more detail below, so that they permit the spine tube 22 of the front frame portion 12 to slide rearwardly between the spine tubes 40 of the rear frame portion 14. Upon such sliding movement: (i) the linkage 18 initially lowers the bottom bracket shell 44 slightly, but then raises it considerably so that it becomes disposed immediately beneath (for example within 100 mm of) the spine tubes 22,40; (ii) the spacing between the front and rear wheels 66,48 reduces considerably, and the steering head 20 enters the space between the spine tubes 40 of the rear frame portion 14 and becomes disposed immediately in front of (for example within 100 mm of) the bottom bracket shell 44 ; (iii) the steering column 60 becomes disposed alongside the saddle 70; and (iv) the trolley wheels 54 descend and engage the ground so that the rear wheel 48 is raised slightly off the ground. The bicycle 10 therefore becomes stable and compact and can be used as a shopping trolley. Once in the compacted configuration, the clamping arrangements 24 can be re-clamped to hold the bicycle 10 in that configuration. Alternatively or additionally, a latch (not shown) may be provided.

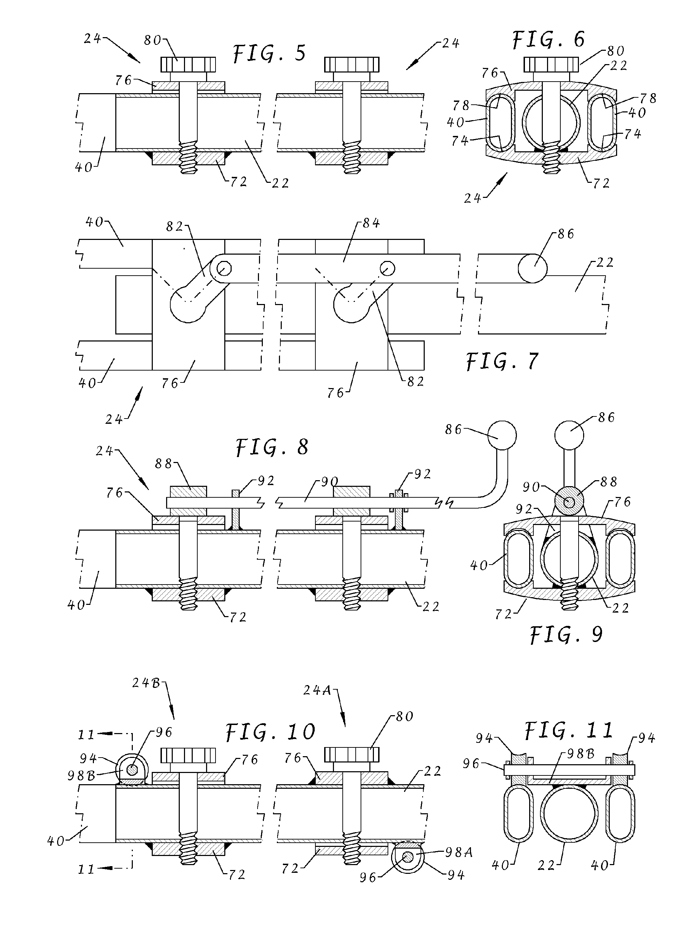

Referring now to Figures 5 and 6, the clamping arrangements 24 each comprise: a lower clamp plate 72 welded to the spine tube 22 of the front frame portion 12 and having a pair of channels 74 slidably receiving the undersides of the spine tubes 40 of the rear frame portion 14; an upper clamp plate 76 having a pair of channels 78 slidably receiving the upper sides of the spine tubes 40 of the rear frame portion 14 and passing over the spine tube 22 of the front frame portion 12 with some clearance, and a thumb screw 80 which passes through plain holes in the upper clamp plate 76 and the top of the spine tube 22 and is screwed into a threaded hole in the lower clamp plate 72 and the underside of the spine tube 22. When the screw 80 is tightened, the spine tubes 40 of the rear frame portion 14 become clamped between the channels 74,78 of the clamp plates 72,76, so that the front and rear frame portions 12,14 become rigid with each other. When the screw 80 is loosened slightly, the spine tubes 40 of the rear frame portion 14 can slide in the channels 74,78 so that the bicycle 10 can be transformed between the cycling configuration of Figure 3 and the compacted configuration of Figure 4.

Figure 7 is a plan view of a second clamping arrangement 24 which is similar to the arrangement of Figures 5 and 6. However, the heads of the thumb screws 80 are replaced by cranks 82. The cranks 82 are interconnected by a link 84 which extends forwardly to an operating knob 86 which remains accessible in front of the rack 30 of the rear frame portion 14 even when the bicycle 10 is in the compacted configuration. Movement of the knob 86 to the left as viewed in Figure 7 turns the cranks 82 and screws 80 through about a right angle to release both clamping arrangements 24, and return of the knob 86 to the right re-clamps the clamping arrangements 24.

Figures 8 and 9 show a third clamping arrangement 24 which is similar to the arrangement of Figures 5 and 6. However, instead of the clamp plates 72,76 being pulled together by a screw 80, they are operated by eccentric cams 88 affixed (for example by grub screws, not shown) to a spindle 90 supported by bearing brackets 92 welded to the spine tube 22 of the front frame portion 12. The spindle 90 has a cranked end provided with an operating knob 86. The arrangement is such that movement of the knob 86 through an arc of about a right angle effect clamping and unclamping of the clamp plates 72,76 with respect to the spine tubes 40.

Figures 10 and 11 show a fourth clamping arrangement 24A,B which is similar to the arrangement of Figures 5 and 6. However, rollers 94 are additionally provided, mounted on spindles 96 carried by brackets 98A,B welded to the spine tube 22 of the front frame portion 12. The front bracket 98A is mounted beneath the front spine tube 22 and its rollers 94 bear on the undersides of the rear spine tubes 40 when the spine tubes 22,40 are unclamped, whereas the rear bracket 98B is mounted above the front spine tube 22 and its rollers 94 bear on the upper sides of the rear spine tubes 40 when the spine tubes 22,40 are unclamped. It will also be noted that the front clamping arrangement 24A has its upper clamp plate 76, rather than its lower clamp plate 72 welded to the spine tube 22 thus enabling rollers 94 to eliminate friction between the channels 74, 78 and spine tubes 40 when the spine tubes 22,40 are unclamped. Similar provisions incorporating rollers 94 may be made for the clamping methods described above with reference to Figures 7 to 9.

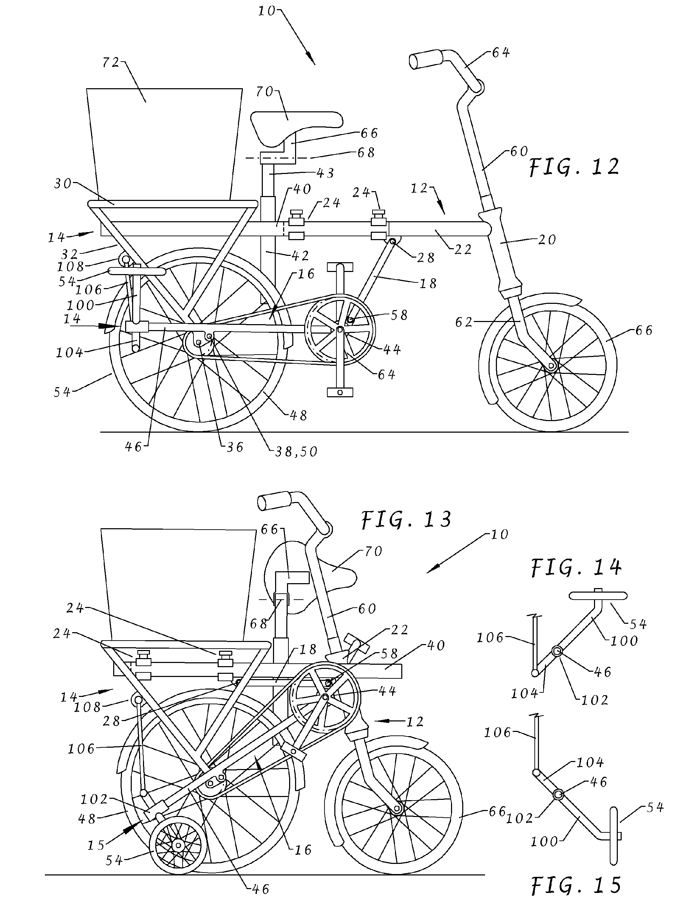

Figures 12-15 show a second embodiment of bicycle 10 which is similar to the first embodiment described above with reference to Figures 1 to 6. However, the rear ends of the arms 46 of the lower frame portion 16 are not bent outwardly. Instead, the trolley wheels 54 are mounted on axles 100 which are rotationally mounted by sleeves 102 on the rear ends of the arms 46 of the lower frame portion 16. The sleeves 102 are also provided with actuator cranks 104. Actuator links 106 are connected by universal joists to the ends of the actuator cranks 104 and to lugs 108 welded to the subframes 32 of the rear frame portion 14. When in the compacted configuration shown in Figures 13 and 15, the trolley wheels 54 assume similar positions to the first embodiment. However, when the bicycle 10 is moved to the cycling configuration, the upward movement of the rear ends of the arms 46 of the lower frame portion 14 causes the trolley wheels 54 to pivot upwardly to the positions shown in Figures 12 and 14.

It will be appreciated that the bicycles 10 described above may be ridden, in the cycling configuration, to, for example, a supermarket. The bicycle 10 can then be transformed into the compacted configuration and be used as a shopping trolley in the supermarket, with goods being loaded into the container 72. Upon leaving the supermarket, the bicycle 10 can be transformed back to the cycling configuration, with the goods still in the container 72, and be ridden home, or to an out-of-town car park. In the latter case, the bicycle can be transformed back into its compacted configuration, the container 72 can be detached and placed in a car, and the bicycle 10 in its compacted configuration can be placed in the luggage compartment of the car.

The rack 30 may also be arranged so that a child seat can be removably attached to it. Alternatively, the container 72 may contain a child seat and have openings through which the child's legs can protrude.

Although two embodiments of bicycle have been described above with reference to the drawings, it will be appreciated that the invention is also applicable to tricycles. In this case, the rear frame portion would be modified to as to provide for mounting of two rear wheels. In the case of a tricycle, there would be no need for the trolley wheels 54.

It should be noted that the embodiments of the invention have been described above purely by way of example and that many other modifications and developments may be made thereto within the scope of the present invention.

## Claims

1. A cycle frame which can be transformed between a cycling configuration and a compacted configuration, the frame comprising:
a rear frame portion (14) having means (34) for mounting at least one rear wheel (48) thereon for rotation about a rear wheel axis;
a front frame portion (12) having a steering head (20) for receiving a steering column (60);
means (22,24,40) connecting the front and rear frame portions together for sliding movement between the cycling configuration and the compacted configuration in which the steering head is closer to the rear wheel axis than in the cycling configuration;
a lower frame portion (16) having means (44) for mounting a crankset, the lower frame portion (16) being pivotally connected to the rear frame portion adjacent the rear wheel axis; and
a linkage (18) pivotally connected to the lower frame portion adjacent the crankset mounting means and to the front frame portion, such that the linkage holds the crankset mounting means at a higher position in the compacted configuration than in the cycling configuration.

2. A frame as claimed in claim 1, wherein the connecting means comprises:
a front spine member (22) of the front frame portion extending rearwardly from the steering head;
a pair of substantially parallel rear spine members (40) of the rear frame portion extending forwardly to either side of the front spine member; and
means (24) releasably clamping the spine members together.

3. A frame as claimed in claim 2, wherein the clamping means comprises:
at least one clamping arrangement having:
upper and lower clamp plates (72,76) mounted on the front spine member and
extending over and under the rear spine members; and
means (80, 88) for moving the upper and lower clamp plates together so that the rear spine members are clamped between the upper and lower clamp plates.

4. A frame as claimed in claim 3, wherein:
one of the clamping plates of the, or each, clamping arrangement is rigidly fixed to the front spine member.

5. A frame as claimed in claim 3 or 4, wherein:
there is a plurality of such clamping arrangements having a common actuating mechanism (84,86,88,90).

6. A frame as claimed in any of claims 2 to 5, wherein:
when in the collapsed configuration, the rear spine members extend forwardly beyond and to either side of the steering head.

7. A frame as claimed in any of claims 2 to 6, wherein:
when in the compacted configuration, the crankset mounting means is disposed closely adjacent the spine members.

8. A frame as claimed in any preceding claim, wherein:
when in the compacted configuration, the crankset mounting means is disposed closely adjacent the steering head.

9. A frame as claimed in any preceding claim, further including:
a saddle post (43) mounted on the rear frame portion and having means (66) for mounting a saddle for movement between a position which is transversely central of the frame and a position in which the saddle is offset transversely from the centre of the frame.

10. A frame as claimed in any preceding claim, wherein:
the rear frame portion has means for mounting two rear wheels so that the frame is a tricycle frame.

11. A frame as claimed in any of claims 1 to 9, wherein:
the rear frame portion has means (34) for mounting a single rear wheel so that the frame is a bicycle frame.

12. A frame as claimed in claim 11, wherein:
the lower frame portion extends from the crankset mounting means beyond the rear wheel axis to a pair of ends (52) to either side of the frame; and
each end of the lower frame portion has means for mounting a further wheel (54) thereon for rotation about a further wheel axis.

13. A frame as claimed in claim 12, further including:
linkages (104,106) acting between the rear frame portion and each further wheel mounting means to alter the inclinations of the further wheel axes between the cycling configuration and the compacted inclination.

14. A cycle (10) which can be transformed between a cycling configuration and a compacted configuration, the cycle comprising:
a frame as claimed in any preceding claim;
at least one rear wheel (48) mounted on the rear frame portion;
a steering column (60) mounted on the steering head;
a front wheel (66) mounted on the steering column;
a crankset (64) mounted on the crankset mounting means;
means for transmitting drive from the crankset to the rear wheel, or at least one of the rear wheels; and
a shopping container (72) mounted on the rear frame portion over the axis of the rear wheel(s).

15. A bicycle as claimed in claim 14 when dependent on claim 12 or 13, wherein:
further wheels are mounted on the ends of the lower frame portion; and
when in the compacted configuration, the further wheels contact the ground to raise the rear wheel off the ground.
